# EUROPEAN PATENT APPLICATION

(11) **EP 4 245 519 A1**
(43) Date of publication of application: **20.09.2023**
(21) Application number: 23153435.5
(22) Date of filing: 26.01.2023
(51) Int. Cl.: B32B 7/025, B32B 9/04, B32B 27/06, B32B 27/08, B32B 27/32, B32B 33/00

(54) **TRIBOELECTRIC MITIGATOR COATING**

(30) Priority: 15.03.2022 US 202217695463
(71) Applicant: Taghleef Industries Inc., Newark, Delaware 19713 (US)
(72) Inventor: PROPST, Eric, Terre Haute, IN 47082 (US)
(74) Representative: HGF

(57) **Abstract**

A multilayer film is disclosed, which includes: a top layer; a bottom layer; and a triboelectric mitigator coating on an external surface of at least one of the top layer and the bottom layer, wherein the bottom layer is a different material having different triboelectric properties than the top layer and the triboelectric mitigator coating is effective to reduce static discharge from the multilayer film when it is unwound from a roll. A method of reducing static discharge during unrolling of a roll of film and a method for providing the multilayer film are also disclosed.

## Description

### BACKGROUND OF THE INVENTION

### 1. FIELD OF INVENTION

This invention relates to plastic films and more particularly to reducing or eliminating static discharge caused by the unrolling of rolls of plastic films.

### 2. DESCRIPTION OF RELATED ART

The development of electric charge on plastic films is a danger to people working with the films as well as to the integrity of the film itself. Most plastic films are excellent electrical insulators and therefore are able to develop and maintain electrical charges on the surfaces of the films.

In order to dissipate the charge, various means have been developed. Such techniques include contacting the surface with a grounded metal wire, tinsel, mesh, or roller or blowing ionized air on the surface to neutralize the charges that develop on the film surface.

A technique commonly used by those who work with the films is including an anti-static additive in the polymer formulation of the film itself. The additive promotes rapid dissipation of charge on the surface, typically achieving the reduction of hundreds of volts in milliseconds of time. However, the additives have a tendency to negatively impact the ability to print the surface or reduce the adhesion of the ink to the film surface.

While mechanical and additive means can generally be effective at dissipating charge on a polymer surface, a particularly difficult situation arises when a roll of plastic film is unwound quickly where the film has two different surfaces and where the surfaces have different tendencies to transfer or accept electrons. The result is commonly referred to as the triboelectric effect. In this situation, there is no space or time to dissipate the charge with a polymer additive or a mechanical means. Consequently, a charge develops and then is almost immediately released by the formation of an electric spark from the free film to the roll. This spark can be severe and very hazardous to worker. A 6400 m (500 kg) roll of film one meter wide with one surface of polyamide and a second surface of polypropylene will generate extreme electrical discharge when unwound at 600 meters per minute. This effect is not unusual in common film processes like slitting, lamination, coating, and printing.

Prior attempts have been made to reduce static discharge on plastic films. U.S. Patent 5,244,724 discloses a uniform basis weight self-bonded, fibrous nonwoven web having improved antistatic, softness and retention of water resistance in the presence of antistatic agents and composites comprising the nonwoven web useful for applications in the hygiene, healthcare, agriculture, and other markets.

U.S. Patent No. 5,071,699 discloses an anti-static flexible fabric material formed from woven, axially oriented crystalline polypropylene yarn, said fabric further characterized as having a coating of a flexible, thermoplastic polymer on one or both sides of the fabric. Anti-static properties are imparted to the fabric by formulating the thermoplastic coating to contain from about 0.2 to about 8% by weight of a polyol ester (preferably glycerol) of a C₁₀ to C₂₈ fatty acid. The polypropylene yarn may optionally itself also contain a lesser amount of the polyol ester of a C₁₀ to C₂₈ fatty acid to provide a fabric having even more enhanced anti-static properties. In another embodiment, the polypropylene yarn may additionally have interwoven therewith or in contact therewith at intervals conductive yarns to provide even more enhanced anti-static properties. A particular advantage of the fabrics is that containers constructed therefrom need not be grounded during filling and emptying operations. As static charges are generated, the electrons can flow across the fabric and dissipate or bleed into the atmosphere almost immediately. However, there is no triboelectric difference driving the formation of charge between two materials of the same composition.

U.S. Patent No. 4,214,038 discloses a non-staining, anti-static fabric softening composition comprising particular polyglycerol esters, which is applied to fabrics in an automatic laundry dryer. However, there is no triboelectric difference driving the formation of charge.

U.S. Patent No. 7,517,623 B2 relates in general to electrophotographic imaging members, such as layered photoreceptor structures, and processes for making and using the same. More particularly, the embodiments pertain to the incorporation of polyol esters and/or amides in the anticurl back coating to reduce or eliminate static charge buildup in the imaging member and to improve image quality.

WO 2019/046906 A1 discloses dipped elastomeric articles having electrostatic dissipative (ESD) properties and methods for their manufacture. The dipped elastomeric articles comprise an elastomeric film and a coating layer on a surface of the article, the coating layer comprising a polyol material selected from the group consisting of polyols, polyol esters and polyol derivatives; wherein the elastomeric article has a surface resistivity of 1011 Q/sq or less. The manufacturing methods comprise the step of applying a coating composition comprising a polyol material selected from the group consisting of polyols, polyol esters, and polyol derivatives onto a surface of an elastomeric film.

U.S. Patent No. 5,525,243 discloses a finish for textile fibers to improve friction and antistatic properties. The finish formulation is an emulsion. The antistatic additives considered are not polyol esters. A polyol ester is listed in the emulsifier section. The emulsifier is required to enable the formation of a micelle such that a hydrophobic oil can be accommodated into an aqueous finish. The patent teaches that an emulsifier is not needed when the lubricant is hydrophilic.

CA 2538977 discloses the use of a polyol ester as an additive to a polypropylene polymer used to form a fiber or as an additive in a polymer coating on both sides of the polypropylene fiber fabric where no triboelectric difference exists.

Despite the foregoing developments, there is still a need for a technique for reducing static discharge caused as a result of the triboelectric effect.

All references cited herein are incorporated herein by reference in their entireties.

### BRIEF SUMMARY OF THE INVENTION

Accordingly, a first aspect of the invention provides a multilayer film comprising: a top layer; a bottom layer; and a triboelectric mitigator coating on an external surface of at least one of the top layer and the bottom layer, wherein the bottom layer is a different material having different triboelectric properties than the top layer and the triboelectric mitigator coating is effective to reduce static discharge from the multilayer film when it is unwound from a roll.

In certain embodiments, the top layer and the bottom layer independently comprise a member selected from the group consisting of polymers and metal oxides. For example the top layer may be or comprise a polymer and the bottom layer may be or comprise the same or a different polymer; the top layer may be or comprise a metal or metalloid oxide and the bottom layer may be or comprise the same or a different metal or metalloid oxide, the top layer may be or comprise a polymer and the bottom layer may be or comprise a metal or metalloid oxide. In each case the materials of the top and bottom layers may be reversed.

In certain embodiments, the top layer and the bottom layer independently comprise at least one polymer. The polymer may be selected from the group consisting of polypropylene, polyethylene, polyurethane, polyester, polycarbonate, polyamide, polyimide, polyvinyl alcohol, silicone (polysiloxane), polyacrylate and fluoropolymer.

In certain embodiments, the top layer and the bottom layer independently comprise at least one metal or metalloid oxide, for example a metal or metalloid oxide selected from the group consisting of silicon oxide and aluminum oxide.

In certain embodiments, the multilayer film further comprises at least one inner layer. The inner layer may comprise a polyolefin.

In certain embodiments, the triboelectric mitigator coating comprises a polyol ester. The polyol ester may be selected from the group consisting of polyethylene glycol ester, glycerol ester and sorbitan ester.

In certain embodiments, the triboelectric mitigator coating does not interfere with ink adhesion to or ink release from the multilayer film.

In certain embodiments, the film is rolled about itself in a form of a roll.

A second aspect of the invention provides a method of reducing static discharge during unrolling of a roll of film, said method comprising rolling the inventive multilayer film to provide the roll of film to be subsequently unrolled for further use.

In certain embodiments, the roll of film generates less static discharge when unrolled than a reference roll of film identically unrolled and identical to the roll of film except that the reference roll of film comprises none of the triboelectric mitigator coating.

A third aspect of the invention provides a method of providing a multilayer film, for example a method for providing the multilayer film of the invention, comprising the steps of: providing a film comprising a or the top layer and a or the bottom layer; providing a triboelectric mitigator solution; applying the triboelectric mitigator solution to the external surface of at least one of the top layer and the bottom layer; and drying the triboelectric mitigator solution on the external surface to provide the triboelectric mitigator coating and the multilayer film.

In certain embodiments of the film providing method, the top layer and the bottom layer independently comprise a member selected from the group consisting of polymers and metal oxides.

In certain embodiments of the film providing method, the top layer and the bottom layer independently comprise at least one polymer. The polymer may be selected from the group consisting of polypropylene, polyethylene, polyurethane, polyester, polycarbonate, polyamide, polyimide, polyvinyl alcohol, silicone (polysiloxane), polyacrylate and fluoropolymer.

In certain embodiments of the film providing method, the top layer and the bottom layer independently comprise at least one metal or metalloid oxide. The metal or metalloid oxide may be selected from the group consisting of silicone oxide and aluminum oxide.

In certain embodiments, the film providing method further comprises providing at least one inner layer. The inner layer may comprise a polyolefin.

In certain embodiments of the film providing method, the triboelectric mitigator solution comprises a polyol ester. The polyol ester may be selected from the group consisting of polyethylene glycol ester, glycerol ester and sorbitan ester.

In certain embodiments of the film providing method, the tribological mitigator solution may comprise 1-15 wt.% of the polyol ester. The tribological mitigator solution may comprise a solvent. The solvent may comprise water. In an embodiment the tribological mitigator solution comprises 1-15 wt.% of polyol ester provided in a solvent comprising water.

In certain embodiments of the film providing method, the triboelectric mitigator coating does not interfere with ink adhesion to or ink release from the multilayer film.

In certain embodiments of the film providing method, the triboelectric mitigator solution is applied to the external surface by Mayer rod, gravure, reverse gravure, dip, spray, or transfer coating.

In certain embodiments of the film providing method, the triboelectric mitigator solution on the external surface is dried at room temperature or a temperature above room temperature, for example using heated air.

In certain embodiments of the film providing method, the multilayer film is provided as a roll.

### DETAILED DESCRIPTION OF PREFERRED EMBODIMENTS OF THE INVENTION

The invention flows from the discovery that providing a coating of a triboelectric mitigator on at least one surface of a film with two dissimilar surfaces can eliminate the static discharge that occurs immediately upon film layer separation as in the act of unwinding a roll of film at high speed.

### Multilayer Film

In a first aspect of the invention, a multilayer film is provided. The film comprises: a top layer; a bottom layer; and a triboelectric mitigator coating on an external surface of at least one of the top layer and the bottom layer, wherein the bottom layer is a different material having different triboelectric properties than the top layer and the triboelectric mitigator coating is effective to reduce static discharge from the multilayer film when it is unwound from a roll.

In certain embodiments, at least one inner layer is provided between the top layer and the bottom layer. It should be understood that the particular composition(s) of the inner layer(s) do(es) not constitute a limitation on the broadest aspects of this invention. In preferred embodiments, the at least one inner layer comprises a polyolefin. More preferably, the at least one inner layer comprises a polypropylene homopolymer, which is most preferably a high crystalline polypropylene. The polyolefin preferably comprises at least 50 wt.% of the at least one inner layer.

In one non-limiting embodiment of this invention, the at least one inner layer is or comprises a core layer having a nominal thickness of 330 ga. (82.5 microns). In another non-limiting embodiment, the at least one inner layer is or comprises a core layer having a nominal thickness of 280 ga. (70 microns). The inner layer may be or comprise a multilayer structure. For example, the inner layer may comprise plural layers, say a first and second layer or a first, second or third layer or a first second third and... nth layer. The inner layer may comprise a core layer having at least a first and/or a second layer on one or both sides (respectively) thereof. The specific thickness of the at least one inner layer does not constitute a limitation on the broadest aspects of the invention. However, when a core layer is included, it is most preferably the thickest layer in the structure, *i.e.,* the thickest layer of the multilayer film; far exceeding the thickness of the top layer and bottom layer in a three-layer structure. In another non-limiting embodiment of this invention, the at least one inner layer is or comprises a core layer including over 50% and more preferably approximately 70% of a high crystalline polypropylene, for example a high crystalline polypropylene sold under the designation Braskem Inspire 6025 by Braskem America (Philadelphia, PA, USA); approximately 7.5% of a propylene/ethylene copolymer including 2.5% by weight ethylene sold under the designation Braskem DS6D21 by Braskem America; CaCO₃ (voiding agent) and TiO₂ (whitening agent) in percentages conventionally employed to provide a white, voided structure, and a small percentage of one or more slip agents, such as Erucamide and Behenamide, as is well known in the art.

The number of layers of the multilayer film can be varied in accordance with the broadest aspects of this invention. However, the multilayer film comprises at least two layers, namely the top layer and the bottom layer. At least one inner layer is optional. The number of inner layers can be 1, 2, 3, 4, 5 or more.

In preferred embodiments, the top layer and a bottom layer independently comprise a member selected from the group consisting of polymers and metal oxides. In certain embodiments, the top layer and the bottom layer independently comprise at least one polymer selected from the group consisting of polypropylene, polyethylene, polyurethane, polyester, polycarbonate, polyamide, polyimide, polyvinyl alcohol, silicone, polyacrylate and fluoropolymer. In certain embodiments, the top layer and the bottom layer independently comprise at least one metal oxide selected from the group consisting of silicone oxide and aluminum oxide.

As the invention relates to the mitigation of the triboelectric effect, the multilayer film has a structure that would suffer from (or suffer more from) the triboelectric effect but for the inclusion of the triboelectric mitigator in the film. Thus, the top layer and the bottom layer must be sufficiently different so as to result in the triboelectric effect during roll unwinding. In preferred embodiments, the top and bottom layers are constructed of substantially distinctly different materials not merely different levels of the same composition. The invention is particularly useful for films where one of the top layer and bottom layer comprises a polyamide, which is very high on the triboelectric scale with a high tendency to reject electrons to many other polymer surfaces including polypropylene, polyethylene, and polyurethane. However, the particular combinations of surface layers (i.e., top and bottom layers) is not limited since a difference in electron donor or acceptor behavior is always observed between two dissimilar materials.

The surface layers preferably have low electrical conductivity.

The triboelectric mitigator coating of the multilayer film is effective to reduce or eliminate static discharge during unrolling of a roll of the film. The triboelectric mitigator coating preferably comprises a polyol ester selected from the group consisting of polyethylene glycol (PEG) ester, glycerol ester and sorbitan ester. Suitable PEG esters include but are not limited to PEG fatty acid esters, PEG glycerol fatty acid esters, such as PEG oleate, PEG cocoate, PEG stearate, PEG acrylate, PEG glycerol cocoate and PEG 40-hydrogenated castor oil. Suitable glycerol esters include but are not limited to glycerol stearate, glycerol oleate, glycol acrylate and polyglycerol esters of fatty acids. Suitable sorbitan esters include but are not limited to sorbitan laurate, sorbitan stearate and sorbitan palmitic. The preferred polyol esters are from the class of polysorbates such Polysorbate 20 and Polysorbate 80 also referred to commercially as Tween 20 and Tween 80. This material also enables maintenance of food grade purity for films where that requirement is necessary or preferred.

The triboelectric mitigator is a liquid at normal use conditions and remains so even after the coating is dried to remove the water or alcohol used for dilution and accommodating the method of coating. A liquid coating would have been expected to be undesirable for application uses that require adhesion to the film. This is one of the surprising observations regarding the triboelectric mitigator coating of the invention. Even though it exists as a liquid at room temperature, the coating appropriately applied does not impact ink adhesion or ink application.

Ink application and adhesion can be determined as outlined in the test procedure below. A UV curing screen ink namely, Norcote 80-1019 Opaque Black UV Screen (Norcote International, Crawfordsville, IN, USA) is applied to the film by first placing a screen mesh 355 34-micron thread @ 90° 10x10 new CD flat frame with a 3x3 inch square image (Sefar Group Heiden, Switzerland) on the film surface. The ink is then drawn across the screen with a Ryonet Ergo Force Squeegee 6 inches wide with a 70 durometer (Ryonet Corp Vancouver, WA, USA). The screen is then removed. The ink area should be uniform in color. The extent of uniformity is assessed by the tester as a percentage of ink coverage called the Percent Ink Application. 100% indicates that the ink has been successfully transferred to the surface uniformly. Lesser percentages indicated the degree to which the ink was poorly transferred. The inked film is run through a UV light tunnel (Fusion LC6B Heraeus Group, Hanau, Germany) with a D bulb at 50 ft/min where the ink is completely cured. Four types of adhesive tape applied to the ink surface, namely, 800, 810, 600, and 610 Scotch tape (3M Corporation Maplewood, MN, USA). The tape is pulled from the ink surface at a moderate rate and a 45° angle. It is desirable that on average over the four tapes, at least 90% of the ink remains adhered to the film surface, called the Percent Ink Adhesion. The percentage is assessed visually by the tester.

The triboelectric mitigator coating preferably does not interfere with ink adhesion to or ink release from the multilayer film.

The multilayer film can be clear or opaque.

### Method of Reducing Static Discharge

A second aspect of the invention is a method of reducing static discharge during unrolling of a roll of film, said method comprising rolling the inventive film to provide the roll of film to be subsequently unrolled for further use. The roll of film preferably generates less static discharge when unrolled than a reference roll of film identically unrolled and identical to the roll of film except that the reference roll of film comprises none of the triboelectric mitigator coating.

### Method of Providing a Multilayer Film

A third aspect of the invention is a method for providing the inventive film, comprising the steps of: providing a film comprising the top layer and the bottom layer; providing a triboelectric mitigator solution; applying the triboelectric mitigator solution to the external surface of at least one of the top layer and the bottom layer; and drying the triboelectric mitigator solution on the external surface to provide the triboelectric mitigator coating and the multilayer film.

The triboelectric mitigator is preferably applied as a coating to at least one external surface of the film. The coating solution is created by dissolving the mitigator in a solvent, such as water, to a sufficient concentration which depends on the method of application. The coating solution optionally comprises a small amount of defoamer. The coating solution optionally further comprises an alcohol, such as methanol, ethanol, propanol or butanol, to aid in wetting.

Suitable coating methods include but are not limited to: Mayer rod, gravure, reverse gravure, dip, spray and transfer coating. The coating is dried to remove the water or alcohol at room temperature or using heated air. The method of drying is not critical to the invention.

The lower limit of addition is determined by the reduction of electric discharge at the point of film separation upon unwind. The upper limit is determined by achievement of acceptable ink application and adhesion. In certain embodiments, the triboelectric mitigator solution comprises 0.75 to 20 wt.%, or 1 to 15 wt.%, or 2 to 12 wt.% or 5 to 10 wt.% of the triboelectric mitigator. In an embodiment the triboelectric mitigator solution comprises from 0.5 or 0.75 to 20, 15 or 10 wt.%, say from 1 to 10, 15, to 20 wt.% of a polyol ester.

Preferably, the triboelectric mitigator coating does not interfere with ink adhesion to or ink release from the multilayer film of the invention. For example, at least 50% or 75% or 100% of ink adheres to the multilayer film and at least 50% or 75% or 100% of ink releases from the multilayer film of the invention.

### EXAMPLES

The invention will be illustrated in more detail with reference to the following Examples, but it should be understood that the present invention is not deemed to be limited thereto.

Commercial film (PPGBCE 65) from Taghleef Industries was used in the examples. The film has a urethane coating on one surface and a polyamide polymer on the opposing surface. The urethane coating is designed for excellent printability.

The urethane surface of the film was coated with a solution of water and polyol ester. The specific polyol ester was polysorbate 20 (Organic Health and Beauty Inc. Westchester, IL, USA). The coating solution was fed to a full-scale commercial reverse gravure coating head. Because this coating method does not deliver a metered amount of coating to the surface, the quantity of the polysorbate 20 delivered to the surface is not known in absolute terms. However, by changing the concentration the relative amount can be inferred. The coated rolls were approximately 500 kg, contained 6400m of film, and were 1.2 meters wide. The experimental control roll was not coated with a polysorbate 20 solution.

The rolls were coated and dried at 60°C and allowed to sit for 3 weeks. The rolls were then rewound at 600 m/min. The extent of electric discharge at the point of film separation from the roll was observed. The results are shown in Table 1 below.

**Table 1 - Triboelectric Mitigator Effect on Static Discharge**

| Example | Concentration of polysorbate 20 in the coating solution (wt.%) | Static Discharge at Rewind | % UV ink application | % UV ink adhesion |
|---|---|---|---|---|
| 1 | 0 | Severe | 100 | 100 |
| 2 | 0.1 | Severe | 100 | 100 |
| 3 | 0.5 | Severe | 100 | 100 |
| 4 | 1 | Moderate | 100 | 100 |
| 5 | 5 | None | 100 | 100 |

Interestingly the static decay was measured on the film that eliminated the static discharge at rewind and found to be rather low, only achieving 500V of decay in 2 to 8 seconds. This is a very modest dissipation capability, yet it was very effective at eliminating the triboelectric effect from taking place at the instant where the film surfaces separate.

Laboratory coatings using a Mayer rod coating technique on hand sheet samples of film showed similar UV ink Adhesion results. Because higher concentrations were difficult to run using the full-scale commercial reverse gravure technique, the laboratory coating process was used to demonstrate the problem of excessive coating on ink application and adhesion. The coating was applied with a #4 Mayer rod winding. The coating was dried in a convection oven for 2 minutes at 80°C. Table 2 below shows the result of higher % polysorbate 20 in the water solution that could not be run on the commercial coater.

**Table 2 - Ink Application and Adhesion**

| Example | Wt.% polysorbate 20 in water | % ink application | % ink adhesion |
|---|---|---|---|
| 6 | 1 | 100 | 100 |
| 7 | 5 | 100 | 100 |
| 8 | 10 | 100 | 100 |
| 9 | 20 | 75 | 50 |
| 10 | 30 | 60 | 50 |
| 11 | 50 | 25 | 50 |

While the invention has been described in detail and with reference to specific examples thereof, it will be apparent to one skilled in the art that various changes and modifications can be made therein without departing from the spirit and scope thereof.

## Claims

1. A multilayer film comprising:
a top layer;
a bottom layer; and
a triboelectric mitigator coating on an external surface of at least one of the top layer and the bottom layer,
wherein the bottom layer is a different material having different triboelectric properties than the top layer and the triboelectric mitigator coating is effective to reduce static discharge from the multilayer film when it is unwound from a roll.

2. The multilayer film of claim 1, wherein the top layer and the bottom layer independently comprise a member selected from the group consisting of polymers and metal or metalloid oxides and/or wherein the top layer and the bottom layer independently comprise at least one polymer, wherein the polymer may be selected from the group consisting of polypropylene, polyethylene, polyurethane, polyester, polycarbonate, polyamide, polyimide, polyvinyl alcohol, silicone, polyacrylate and fluoropolymer and/or wherein the top layer and the bottom layer independently comprise at least one metal or metalloid oxide, for example a metal or metalloid oxide selected from the group consisting of silicon oxide and aluminum oxide.

3. The multilayer film of claim 1 or 2, further comprising at least one inner layer comprising a polyolefin.

4. The multilayer film of claim 1, 2 or 3, wherein the triboelectric mitigator coating comprises a polyol ester, wherein the polyol ester may be selected from the group consisting of polyethylene glycol ester, glycerol ester and sorbitan ester.

5. The multilayer film of any preceding claim, wherein the triboelectric mitigator coating does not interfere with ink adhesion to or ink release from the multilayer film.

6. The multilayer film of any preceding claim, wherein the multilayer film is rolled about itself in a form of a roll.

7. A method of reducing static discharge during unrolling of a roll of film, said method comprising rolling the multilayer film of any of claims 1 to 6 to provide the roll of film to be subsequently unrolled for further use.

8. The method of claim 7, wherein the roll of film generates less static discharge when unrolled than a reference roll of film identically unrolled and identical to the roll of film except that the reference roll of film comprises none of the triboelectric mitigator coating.

9. A method for providing the multilayer film of any of claims 1 to 6, comprising the steps of:
providing a film comprising the top layer and the bottom layer;
providing a triboelectric mitigator solution;
applying the triboelectric mitigator solution to the external surface of at least one of the top layer and the bottom layer; and
drying the triboelectric mitigator solution on the external surface to provide the triboelectric mitigator coating and the multilayer film.

10. The method of claim 9, wherein the top layer and the bottom layer independently comprise a member selected from the group consisting of polymers and metal or metalloid oxides and/or wherein the top layer and the bottom layer independently comprise at least one polymer, the polymer may be selected from the group consisting of polypropylene, polyethylene, polyurethane, polyester, polycarbonate, polyamide, polyimide, polyvinyl alcohol, silicone, polyacrylate and fluoropolymer and/or wherein the top layer and the bottom layer independently comprise at least one metal or metalloid oxide, and wherein the metal or metalloid oxide may be selected from the group consisting of silicone oxide and aluminum oxide.

11. The method of claim 9 or 10, further comprising providing at least one inner layer comprising a polyolefin.

12. The method of claims 9, 10 or 11, wherein the triboelectric mitigator solution comprises a polyol ester, and wherein the polyol ester may be selected from the group consisting of polyethylene glycol ester, glycerol ester and sorbitan ester and optionally wherein 1-15 wt.% of the polyol ester is provided in a solvent comprising water.

13. The method of any of claims 9 to 12, wherein the triboelectric mitigator coating does not interfere with ink adhesion to or ink release from the multilayer film.

14. The method of any of claims 9 to 13, wherein the triboelectric mitigator solution is applied to the external surface by Mayer rod, gravure, reverse gravure, dip, spray, or transfer coating, and the external surface is dried at room temperature or using heated air.

15. The method of any of claims 9 to 14, wherein the multilayer film is provided as a roll.
